# EUROPEAN PATENT SPECIFICATION

(11) **EP 3 197 933 B1**
(45) Date of publication and mention of the grant of the patent: **09.09.2020**
(21) Application number: 15771888.3
(22) Date of filing: 21.09.2015
(51) Int. Cl.: C08G 59/40, C08K 5/00, C08L 63/00

(54) **FAST CURING COMPOSITIONS**
SCHNELL HÄRTENDE ZUSAMMENSETZUNGEN
COMPOSITIONS À DURCISSEMENT RAPIDEMENT

(30) Priority: 22.09.2014 GB 201416670
(43) Date of publication of application: 02.08.2017
(73) Proprietor: Hexcel Composites Limited, Duxford Cambridgeshire CB22 4QB (GB)
(72) Inventor: HARRINGTON, Chris, Duxford Cambridgeshire CB22 4QD (GB)
(74) Representative: Eddowes, Simon
(86) International application number: PCT/EP2015/071622
(87) International publication number: WO 2016/046138

(56) References cited:
- WO-A2-2014/096435
- JP-A- 2008 038 082

## Description

The present invention relates to fast curing epoxy resin compositions and to the use of such fast curing resins as the matrix in prepregs. Additionally the invention relates to the moulding of such resins and prepregs and in particular to the sequential moulding of high volumes of material and in particular to moulding sequences in which each moulding operation has a short cycle time. The resins and prepregs are particularly useful in the production of high volumes of materials from prepregs by compression moulding or stamping where moulding cycles of less than 5 minutes and often less than 2 minutes are required.

The present invention is concerned with such resins and prepregs and cure time for a resin formulation as used herein is also the time required for 95% cure as measured by Digital Scanning calorimetry and the glass transition temperature (Tg) of the resin is measured by Differential Mechanical Analysis according to ASTM D7028.

These fast cure epoxy resin systems allow faster moulding cycles to be employed in the production of articles therefrom. Articles are often manufactured from fibre reinforced epoxy resins in processes in which multilayers of fibre reinforcement and epoxy resins are laid up in a mould and cured to form the finished article. A fibrous layer impregnated with a curable resin is known herein as a prepreg and the resin in the prepreg may be uncured or partially cured.

Epoxy formulations typically contain epoxy resins which may be selected from a wide range of epoxy containing materials according to the cure cycle to be employed and the nature of the finished article to be produced. Epoxy resins can be solid, liquid or semi-solid and are characterised by their functionality and epoxy equivalent weight. The functionality of an epoxy resin is the number of reactive epoxy sites per molecule that are available to react and cure to form the cured structure. For example, a bisphenol-A epoxy resin which has a functionality of 2, certain glycidyl amines can have a functionality of more than 4. The reactivity of an epoxy resin is indicated by its epoxy equivalent weight (EEW). The lower the EEW, the higher the reactivity. The EEW is the weight of epoxy resin material in grams containing 1 gram per mole of epoxy groups.

Epoxy formulations may also include catalysts and/or curatives and these may also be selected according to the nature of the epoxy resin, the product to be produced and the cure cycle that is required.

Epoxy resin systems are generally cured in a mould where several layers are superimposed with layers of the fibrous reinforcement such as carbon fibre, glass fibre, Kevlar and aramid fibre. The systems are then cured in the mould by heating.

Cured epoxy resin systems can be brittle and it is well known to include impact modifiers in the epoxy resin systems in order to reduce their brittleness. Typical impact modifiers that have been proposed are thermoplastic materials such as polyamides including nylon 6, nylon 11, and nylon 66 or polyethers, polyvinyl formaldehyde and polysulfones and/or combinations of the aforesaid components.

The curing of epoxy resin is an exothermic reaction and care must be taken to avoid reaction runaway and the overheating of the material in the mould which can cause damage to both the moulding materials and the mould itself.

The cure cycles employed for curing prepregs and stacks of prepregs are a balance of temperature and time taking into account the reactivity of the resin. From an economic point of view it is desirable that the cycle time is as short as possible and so curing agents and accelerators are usually included in the epoxy resin. As well as requiring heat to initiate curing of the resin the curing reaction itself can be highly exothermic and this needs to be taken into account in the time/temperature curing cycle. It is important to balance the needs for short moulding cycles employing reactive resins and controlling the exotherm to avoid damage to the resin and/or the mould.

The outlife of a resin is the duration for which the resin can be stored without it cross linking to a point where it is no longer useable. The desire for a short cure cycle must also be balanced with the outlife of the resin. The cure cycle can be reduced by adding more curing agents and accelerators, however this compromises the outlife of the resin.

For example a thick stack of epoxy based prepregs such as 60 or more layers can require cure temperatures above 100°C for several hours. However, the cure can have a reaction enthalpy of 150 joules per gram of epoxy resin or more and this reaction enthalpy brings the need for a dwell time during the cure cycle at below 100°C to avoid overheating and decomposition of the resin. Furthermore, following the dwell time it is necessary to heat the stack further to above 100°C (for example to above 125°C) to complete the cure of the resin. This leads to undesirably long and uneconomic cure cycles. In addition, the high temperatures generated can cause damage to the mould, bag materials, the cured resin and fibres or require the use of special and costly materials for the moulds or bags.

In addition, once cured the epoxy based structure has a glass transition temperature (Tg) above which the moulding is not sufficiently self-supporting to enable it to be removed from the mould. In this situation it is therefore necessary to allow the moulding to cool down to below the Tg before it can be removed from the mould. There is therefore a desire to produce laminar structures from prepregs in which the cured resin has a high glass transition temperatures (Tg) to enable the cured material to be sufficiently stiff to be removed from the mould shortly after curing or upon curing to a desired level, typically 95%. It is therefore preferred that the Tg be at or near the maximum temperature. Increase in the Tg may be achieved by using a more reactive resin. However the higher the reactivity of the resin the greater the heat released during curing of the resin in the presence of hardeners and accelerators which can increase the need for dwell time and delay before removal from the mould.

The need for higher Tg and low phase angle must therefore be balanced with requirements for handleability of the prepreg and with the economic needs to minimise the time required for the moulding cycle which includes the ability to remove the moulding from the mould. The moulding cycle for epoxy resins and prepregs involves three stages:
i) the provision (laying up) of materials (prepregs) in the mould;
ii) the curing reaction; and
iii) the removal of the cured product from the mould.

There is therefore a need for an epoxy resin system which provides a prepreg that can be easily provided to a mould, can be cured rapidly at a particular temperature and which enables the cured material to be demoulded at temperatures near to or at the curing temperature.

WO2014/096435 discloses a fast cure epoxy resin system that upon curing has a Tg no greater than 140°C and a Phase angle below 20° at a temperature of 140°C or below, and prepregs and mouldings based on the system. The resin formulation matches the reactivity of the resin to the amount of curative and hardener employed.

JP2008 038082 discloses an epoxy resin composition for pultrusion molded product comprising (a) an epoxy resin, (b) an acid anhydride and (c) an imidazole derivative; wherein the epoxy resin includes 60-100 pts.wt., based on 100 pts.wt. of the whole epoxy resin, of a bifunctional epoxy resin 3,000 or lower in viscosity at 25°C, and the imidazole derivative includes an imidazole derivative bearing a substituent on its 1-position

The present invention aims to mitigate the above described problems and/or to provide improvement generally.

According to the invention, there is provided a formulation, a prepreg and a use as defined in any one of the accompanying claims.

There are two principal requirements for demoulding, firstly that the cured moulding does not stick to the mould and secondly that the moulding is sufficiently strong to be demoulded which requires the Tg to be greater than or close to the moulding temperature so that only a short cooling time is required for the moulding to be self standing.

The present invention is particularly concerned with a prepreg containing a reactive epoxy resin composition that can be cured over a short moulding cycle time and which allows the cured material to be removed from the mould shortly after curing.

Fast cure resins and prepregs have been found to be useful in the production of articles from high performance composites in high volume markets requiring short moulding times. However, the high reactivity required for these short moulding times can result in the resin bonding to the mould surface during curing of the resin. This in turn can damage the mould and can require shutting down the high volume manufacturing line. It has therefore been practice to apply a release agent to the surface of the mould before the raw materials for component manufacture are introduced into the mould to prevent bonding with the surface of the mould and to enable ready removal of the moulding from the mould after cure. This however requires stopping the moulding sequence to allow introduction of the release agent which unacceptably prolongs the moulding cycle.

Conventionally it was considered that the addition of mould release agents to epoxy matrix formulations degrades the mechanical properties, including Tg. As yet a release agent that can be successfully incorporated into a fast curing epoxy resin and particularly into such an epoxy resin when it is used as the curable matrix in a prepreg has not been found.

However, we have now found that organic fatty acids and their derivatives preferably when blended with surfactants perform well when used as a mould release agent in fast curing epoxy resin systems and prepregs in which the fast curing epoxy resin is employed as the matrix.

Surfactants may comprise fluorochemicals, alcohols, silicones, hydrocarbons and/or combinations thereof. A preferred surfactant may contain both fluorochemical groups and alcohol groups.

In an embodiment, the release agent comprises from 100 to 90 weight%, preferably from 100 to 95 weight%, more preferably from 100 to 98 weight% and even more preferably from 100 to 99 weight% based on the weight of the release agent of organic fatty acids.

In a further embodiment, the release agent comprises from 0 to 15 weight%, preferably from 0 to 10 weight%, more preferably from 0 to 5 weight% and even more preferably from 0 to 1 weight% or from 0 to 0.5 weight% based on the weight of the release agent of surfactants.

The present invention provides an epoxy resin formulation containing a urea based curing agent that can be cured at 150°C to 95% cure, as measured by Digital scanning Calorimetry, in no more than 150 seconds, and can be cured at 120°C to 95% cure in no more than 4 minutes to provide a cured resin having a glass transition temperature (Tg) as determined in accordance with ASTM D7028 of no greater than 140°C, wherein the formulation further contains a mould release agent and further wherein the release agent comprises unsaturated fatty acids and/or saturated fatty acids; or wherein the release agent comprises components selected from triglycerides; or wherein the release agent comprises polyunsaturated fatty acids and/or mono unsaturated fatty acids and/or saturated fatty acids; or wherein the release agent comprises one or more components selected from alpha linoleic acid, linoleic acid, oleic acid, stearic acid, and palmitic acid.

The cured epoxy resin formulation preferably has a Phase angle below 20° at a temperature below 140°C, preferably below 15°, more preferably below 10°. The phase angle may be above 10° or 20° or 30° or 40° at a temperature below 140°C.

In another embodiment, there is provided a prepreg employing an epoxy resin formulation as the matrix for the prepreg.

The cure time for the resin formulation is defined as the time required for 95% cure. The Tg of the resin is measured according to Differential Mechanical Analysis according to Test Method ASTM D7028 and the Tg is considered to be the temperature at which there is an onset of the drop in storage modulus.

Digital Scanning Calorimetry was utilized to monitor the time to reach 95% cure as discussed above whereby heating is started at 10°C to 225°C at 10°C/min rate.

We prefer that the resin formulation contains from 0.25 to 5 wt % preferably 0.4 to 3 wt %, most preferably 0.5 to 2 wt % of the mould release agent.

We have found that the blend of organic fatty acid derivatives with surface active agents such as Moldwiz, INT-1324 supplied by Axel Plastics Research Laboratories is a particularly useful mould release agent for use with the fast cure epoxy resins.

Also disclosed is a prepreg comprising fibrous reinforcement and an epoxy resin formulation that can be cured at 150°C in no more than 150 seconds, can be cured at 120°C in no more than 4 minutes to provide a cured resin having a Tg no greater than 140°C, and a Phase angle of 20° or less at a temperature of 140°C or below wherein the epoxy resin contains a mould release agent.

Also disclosed is a prepreg comprising fibrous reinforcement and an epoxy resin formulation that can be cured at 150°C in no more than 10 to 140 seconds, 30s to 180s, preferably from 40s to 120s, more preferably from 35s to 100s and/or combinations of the aforesaid ranges, and can be cured at 120°C in no more than 30s to 220s, preferably from 80s to 200s, more preferably from 130s to 190s and/or combinations thereof to provide a cured resin having a Tg no greater than 140°C, and a Phase angle of 20° or less at a temperature of 140°C or below wherein the epoxy resin contains a mould release agent.

Also disclosed is the production of laminar structures by laying up a stack of layers of prepregs employing the resin formulation of this invention and causing the stack to cure. Such layers of curable structures in which the resin is uncured are sometimes known as prepregs.

We prefer that the resin formulation contains from 0.25 to 5 wt % preferably 0.4 to 3 wt %, most preferably 0.5 to 2 wt % of the mould release agent.

The release agent may comprise unsaturated fatty acids and/or saturated fatty acids. The release agent may also comprise components selected from triglycerides. The release agent comprises polyunsaturated fatty acids and/or mono saturate fatty acids and/or saturated fatty acids.

An epoxy resin formulation according to any of the preceding claims, wherein the release agent comprises one or more components selected from alpha linoleic acid, linoleic acid, oleic acid, stearic acid, and palmitic acid.

We have found that the blend of organic fatty acid derivatives with surface active agents such as Moldwiz, INT-1324 supplied by Axel Plastics Research Laboratories is a particularly useful mould release agent for use with the fast cure epoxy resins. In particular we have found it is useful and compatible with such resin formulations employing urea based curing agents. It has also been found to be compatible with other ingredients that may be included in the epoxy resin formulation. The mould release agent containing resin formulation in accordance with the present invention can be used in successive moulding cycles without the need to apply a release agent to the mould surface.

The resin formulation of the present invention comprising a fatty acid based release agent, can provide a release force of from 0 N to 20 N, preferably from 0N to 10N, more preferably from 0N to 3N when tested using the paint adhesion test in accordance with ASTM D4541. Release forces of 0 N or from 0.1N to 1N can be achieved when the resin formulation comprises between 0.25 and 2 wt % of the release agent in relation to the weight of the resin formulation. The low weight% of release agent means that the mechanical properties and cure time of the resin formulation are not extensively degraded. Thus the value of Tg following cure of the resin formulation of the present invention is no less than 10%, preferably less than 5%, and more preferably less than 2% of the Tg of the same resin formulation free from a mould release.
The epoxy resin formulation of the present invention can be cured to have a Tg not below 130°C, preferably below 120 °C, and a Wet Tg, aged for 2 weeks immersed in water at 20 °C of not below 90 °C, preferably not below 80 °C.

In a further embodiment of the invention, upon isothermal cure of the epoxy resin composition or formulation at a cure temperature of T_{cure}, the Tg as measured in accordance with ASTM D7028 is in a range of from T_{cure}-20°C < T_{g} < T_{cure}, preferably from T_{cure}-15°C < T_{g} < T_{cure}, more preferably from T_{cure}-10°C < T_{g} < T_{cure}.

In a preferred embodiment, the Tg as measured in accordance with ASTM D7028 is in a range of from T_{cure}-20°C < T_{g} < T_{cure}, preferably from T_{cure}-15°C < T_{g} < T_{cure}, more preferably from T_{cure}-10°C < T_{g} < T_{cure} when cured at a cure temperature T_{cure1} for no more than 10 to 140 seconds, 30s to 180s, preferably from 40s to 120s, more preferably from 35s to 100s and/or combinations of the aforesaid ranges, and cured at a cure temperature of T_{cure2} for no more than 30s to 220s, preferably from 80s to 200s, more preferably from 130s to 190s and/or combinations thereof. T_{cure 1} may be selected from 180°C, 160°C or 150°C and T_{cure2} may be selected from 140°C, 130°C or 120°C.

This provides a cured resin having a Tg no greater than 140°C, and a Phase angle of 20° or less at a temperature of 140°C or below wherein the epoxy resin contains a mould release agent and ensures that the elastic modulus (E) is of a suitable value following cure to allow a moulding to be removed from the mould without its mechanical properties being excessively compromised.

The use of conventional stearate based mould release agents, for example, do not provide an adequate reduction of force for demoulding when used at 2% in the present invention. Therefore they require a greater weight % to reduce the demoulding force. This lowers the mechanical properties.

The epoxy resin composition also comprises one or more urea based curing agents and it is preferred to use from 4 to 10 wt % based on the weight of the epoxy resin of a curing agent, more preferably 4 to 6 wt %, more preferably from 4 to 5 wt %. Preferred urea based materials are the isomers of 2,6 and 2,4 toluene bis dimethyl urea (known as 2,6 and 2,4 TDI urone) such as the range of materials available under the commercial name DYHARD® the trademark of Alzchem, urea derivatives. The composition further comprises a hardener such as dicyandiamide and it is preferred to use from 7% to 10%, more preferably from 8 to 10, most preferably from 8.5 to 9.5% by weight of the hardener. The rapid cure time is achieved by matching the ratio of the curative and the accelerator to the amount of available reactive groups in the epoxy formulation. The higher Tg is obtained by use of a resin having a functionality of at least 2 to provide sufficient reactive groups. The handleability of the prepreg is likewise determined by the nature and amount of the fibrous reinforcement and the nature and amount of the epoxy resin.

Additional properties that may be required of prepregs is their adhesion to substrates to which they may be bonded during curing. For example, prepregs may be laid up with and bonded to other layers such as, for example, metal foils. In the production of skis, prepregs can be laid up with aluminium foils and the edges of the skis can be trimmed with metal. It is therefore important that the required physical properties of the ski and the adhesion between the aluminium and the prepreg or steel that is achieved during curing is not undesirably impacted by the use of the fast curing epoxy resin systems of this invention.

The present invention therefore relates to prepregs comprising fibres and thermosetting resins which may be readily handled and stacked to form a preform and subsequently cured rapidly to form a reinforced composite material having a Tg and a Phase angle enabling removal of the cured material from the mould at temperatures close to the cure temperature combined with a mould release agent to prevent the moulding from sticking to the mould. Such composite materials are lightweight and of high strength and are used in many structural applications such as in the automobile and aerospace industries and in sporting goods applications such as the manufacture of skis.

Prepreg may also be in the form of short segments of chopped unidirectional tape that are randomly oriented to form a non-woven mat of chopped unidirectional tape. This type of prepreg is referred to as a "quasi-isotropic chopped" prepreg. Quasi-isotropic chopped prepreg is similar to the more traditional non-woven fiber prepreg, except that short lengths of chopped unidirectional tape (chips) are randomly oriented in the mat rather than chopped fibers. Quasi-isotropic chopped prepreg is considered to be "transversely isotropic". The random orientation of the unidirectional chips provides isotropic properties in the plane of the mat. The quasi-isotropic chopped prepreg is therefore a transverse isotropic material. Properties are the same in any direction within the plane of the mat. Outside the plane of the mat (z direction), the properties are, however, different.

Quasi-isotropic chopped prepreg has been available commercially from Hexcel Corporation (Dublin, Calif.) under the tradename HexMC®. Quasi-isotropic chopped prepreg has been used in the past for a variety of purposes including bicycle parts and various other molded parts. However, quasi-isotropic chopped prepreg materials have not been used in the manufacture of aerospace parts. This is especially true for aerospace parts, such as aircraft window frames, that are bolted or riveted to the aerospace structure and a multitude of gussets, brackets and connectors, such as cargo floor flange supports, that form bolted or riveted joints in the vehicle structure.

For the purposes of this specification, "quasi-isotropic chopped prepreg" means prepreg that is provided as a mat made up of randomly oriented "chips" of chopped unidirectional tape. The size of the chips may be varied depending upon the particular aerospace part being made. It is preferred that the chips be ⅓ inch (0.85 cm) wide, 2 inches (5 cm) long and 0.006 inch (0.0015 cm) thick. The chips include unidirectional fibers that can be carbon, glass, aramid, polyethylene or any of the fibers types that are commonly used in the aerospace industry. Carbon fibers are preferred. The chips are randomly oriented in the mat and they lay relatively flat. This provides the mat with its transverse isotropic properties.

The quasi-isotropic chopped prepreg can be made by purchasing or making unidirectional prepreg tape of desired width. The tape is then chopped into chips of desired length and the chips are laid flat and pressed together to form a mat of randomly oriented chips. The chips inherently bond together due to the presence of the prepreg resin. The preferred method, however, is to purchase the quasi-isotropic chopped prepreg from a commercial source, such as Hexcel Corporation. Hexcel Corporation provides quasi-isotropic chopped prepreg material under the tradename HexMC®. Quasi-isotropic prepreg may be made from a prepreg comprising the resin formulation of the present invention.

Generally, quasi-isotropic prepreg is made by first forming a charge for a mould and placing within the mould. A charge is typically made to fit within ⅛ to ½ inch of the part edge. The charge is cured by press moulding under pressure and heat. The charge will flow to fill out the part edges and to produce geometrical features. Other features may require more precise placement of the quasi-isotropic chopped prepreg. By fitting the quasi-isotropic chopped prepreg relatively closely to the part edge, "near net" patterns are provided, which is a distinguishable feature not associated with traditional molding compounds. Because quasi isotropic prepreg comprising the resin formulation of the present invention exhibits low flow during cure, it is preferred that pressures of greater than 20 bar are applied to the mould, more preferably greater than 50 bar and more preferably still, greater than 100 bar. High pressures help the charge to completely distribute across the mould.

It is preferred that the molding process be a "low flow" process. A low flow process is defined as molding the quasi-isotropic chopped prepreg with a minimum disturbance of the chips orientation, therefore preserving the transverse isotropic characteristic of the material. This is accomplished by keeping the flow of resin during the molding process at a level that does not re-orient or otherwise unduly disturb the alignment of the chips and their unidirectional fibers.

Prepreg is the term used to describe fibres and fabric impregnated with a resin in the uncured or partially cured state and ready for curing. The fibres may be in the form of tows or fabrics. A tow generally comprises a plurality of thin fibres. The fibrous materials and resins employed in the prepregs will depend upon the properties required of the cured fibre reinforced material and also the use to which the cured laminate is to be put. The fibrous material is described herein as a structural fibre.

Various methods have been proposed for the production of prepregs, one of the preferred methods being the impregnation of a moving fibrous web with a liquid, molten or semi-solid uncured thermosetting resin. The prepreg produced by this method may then be cut into sections of the desired length, and a stack of the sections may be cured by heating to produce the final fibre reinforced laminate. Curing may be performed in a vacuum bag which may be placed in a mould for curing as is preferred in the manufacture of wind energy structures such as shells or blades, or spars. Alternatively, the stack may be formed and cured directly in a mould.

There is disclosed herein a stack of prepregs containing an epoxy resin of functionality at least 2 and an average epoxy equivalent weight (EEW) from 150 to 1500, preferably from 200 to 800, more preferably from 300 to 600 and most preferably from 200 to 500 and/or combinations thereof, the resin being curable by an externally applied temperature at 150°C in no more than 150 seconds to provide a cured resin having a Tg no greater than 140°C and preferably with a Phase angle when cured of less than 20° at temperatures of 140°C or below the resin additionally containing a mould release agent. As mentioned previously the fast cure and the high Tg are obtained by selecting the ratio of curative and hardener to obtain the desired reactivity of the epoxy resin. The average EEW is defined as the average molecular weight of the resin divided by the number of epoxy groups per molecule.

We have found that such desirable prepregs and stacks of prepregs may be obtained if the epoxy resin has a functionality of at least two and is cured in the presence of a hardener such as dicyandiamide and in the presence of a urea based curing agent. The relative amount of the curing agent and the epoxy resin that should be used will depend upon the reactivity of the resin and the nature and quantity of the fibre reinforcement in the prepreg.

Typically higher than normal amounts are used in order to get the rapid cure and we prefer to use from 4 to 10 wt %, more preferably 4 to 6 wt % of the urea based curing agent. A particularly good results have been obtained when using from 4.25 to 4.75 wt % of the urea based curing agent based on the weight of epoxy resin is used and from 6 to 10 wt %, more preferably 7 to 10 wt % of the hardener such as dicyandiamide should be used, particularly good results have been obtained when using 8.5 to 9.5 wt % dicyandiamide especially in combination with 4.25 to 4.75 wt % of the urea based curing agent.

The prepregs of this invention are typically used at a different location from where they are manufactured and they therefore require handleability. It is therefore preferred that they are dry or as dry as possible and have low surface tack. It is therefore preferred to use high viscosity resins. This also has the benefit that the impregnation of the fibrous layer is slow allowing air to escape and to minimise void formation.

The preferred process for producing prepregs is a continuous process involving the passage of many thousands of fibres through a series of stages, typically guided by rollers. The point where the fibres meet the resin, usually in sheet form, is the start of the impregnation stage. Before the fibres are contacted with the resin and reach the impregnation zone they are typically arranged in a plurality of tows, each tow comprising many thousands of filaments, e.g. 12,000. These tows are mounted on bobbins and are fed initially to a combing unit to ensure even separation of the fibres. It has been found that unusually low fibre tensions just after the bobbin feed position provide further improvement to the disruption of the fibres in the eventual prepreg. Thus, the tension per filament at this position is preferably from 0007 to 0.025 g, preferably from 0.01 to 0.015 g.

In the process a second layer of resin comprising thermosetting resin maybe brought into contact with the other face of the fibres typically at the same time as the first layer, compressing the first and second layers of resin such that resin enters the interstices of the fibres. Such a process is considered to be a one-stage process because, although each face of the fibres is contacted with one resin layer, all the resin in the eventual prepreg is impregnated in one stage.

Resin impregnation typically involves passing the resin and fibres over rollers, which may be arranged in a variety of ways. Two primary arrangements are the simple "nip" arrangement and the "S-wrap" arrangement.

An S-wrap stage is wherein the resin and fibres, both in sheet form pass around two separated rotating rollers in the shape of the letter "S", known as S-wrap rollers. Alternative roller arrangements include the widely used "nip" wherein the fibre and resin are pinched, or nipped, together as they pass between the pinch point between two adjacent rotating rollers.

The pressures induced in the resin and fibres can be controlled to cause the desired degree of disruption of the fibre. Parameters such as separation between rollers, speed, relative speed between rollers and resin and fibres and the contact area of the rollers can be varied to achieve the desired degree of disruption and also resin impregnation. Nip stages may also be used, provided the pressures are kept low, e.g. by control over the gap between adjacent rollers.

It has been found that although large pressures in theory provide excellent resin impregnation, they can be detrimental to the outcome of the prepreg in the one-stage process.

Thus, it is preferred that the pressure exerted onto the fibres and resin preferably does not exceed 35 kg per centimetre of width of the fibre layer, more preferably does not exceed 30 kg per centimetre.

For example, when in S-wrap arrangement, two rollers are preferably spaced apart to provide a gap between the centres of them of from 250 to 600 mm, preferably from 280 to 360 mm, most preferably from 300 to 340 mm, e.g. 320 mm.

Two adjacent pairs of S-wrap rollers are preferably separated between the centres of respective rollers of from 200 to 1200 mm, preferably from 300 to 900 mm, most preferably from 700 to 900 mm e.g. 800 mm.

The impregnation rollers may rotate in a variety of ways. They may be freely rotating or driven. If driven, they are conventionally driven so that there is no difference between the speed of rotation and the speed of passage of the resin and fibres over the rollers. Sometimes it may be desirable to apply a slight increased speed or decreased speed relative to the passage of resin and fibres. Such a difference is referred to in the art as "trim".

Following impregnation of resin into the fibres, often there is a cooling stage and further treatment stages such as laminating, slitting and separating.

The moulding material or structure of the invention may be characterized by its resin content and/or its fibre volume and resin volume and/or its degree of impregnation as measured by the water up take test.

Resin and fibre content of uncured moulding materials or structures are determined in accordance with ISO 11667 (method A) for moulding materials or structures which contain fibrous material which does not comprise unidirectional carbon. Resin and fibre content of uncured moulding materials or structures which contain unidirectional carbon fibrous material are determined in accordance with DIN EN 2559 A (code A). Resin and fibre content of cured moulding materials or structures which contain carbon fibrous material are determined in accordance with DIN EN 2564 A.

The fibre and resin volume % of a prepreg moulding material or structure can be determined from the weight % of fibre and resin by dividing the weight % by the respective density of the resin and carbon fibre.

The % of impregnation of a tow or fibrous material which is impregnated with resin is measured by means of a water pick up test.

The water pick up test is conducted as follows. Six strips of prepreg are cut of size 100 (+/-2) mm x 100 (+/-2) mm. Any backing sheet material is removed. The samples are weighed near the nearest 0.001 g (W1). The strips are located between PTFE backed aluminium plates so that 15 mm of the prepreg strip protrudes from the assembly of PTFE backed plates on one end and whereby the fibre orientation of the prepreg is extends along the protruding part. A clamp is placed on the opposite end, and 5 mm of the protruding part is immersed in water having a temperature of 23°C, relative air humidity of 50% +/- 35%, and at an ambient temperature of 23°C. After 5 minutes of immersion the sample is removed from the water and any exterior water is removed with blotting paper. The sample is then weighed again W2. The percentage of water uptake WPU(%) is then calculated by averaging the measured weights for the six samples as follows: WPU(%)=[(<W2>-<W1>)/<W1>)x100. The WPU(%) is indicative of the Degree of Resin Impregnation (DRI).

Typically, the values for the resin content by weight for the uncured prepreg of the invention are in the ranges of from 15 to 70% by weight of the prepreg, from 18 to 68% by weight of the prepreg, from 20 to 65% by weight of the prepreg, from 25 to 60% by weight of the prepreg, from 25 to 55% by weight of the prepreg, from 25 to 50% by weight of the prepreg, from 25 to 45% by weight of the prepreg, from 25 to 40% by weight of the prepreg, from 25 to 35% by weight of the prepreg, from 25 to 30% by weight of the prepreg, from 30 to 55% by weight of the prepreg, from 35 to 50% by weight of the prepreg and/or combinations of the aforesaid ranges.

Typically, the values for the resin content by volume for the uncured prepreg of the invention are in the ranges of from 15 to 70% by volume of the prepreg, from 18 to 68% by volume of the prepreg, from 20 to 65% by volume of the prepreg, from 25 to 60% by volume of the prepreg, from 25 to 55% by volume of the prepreg, from 25 to 50% by volume of the prepreg, from 25 to 45% by volume of the prepreg, from 25 to 40% by volume of the prepreg, from 25 to 35% by volume of the prepreg, from 25 to 30% by volume of the prepreg, from 30 to 55% by volume of the prepreg, from 35 to 50% by volume of the prepreg and/or combinations of the aforesaid ranges.

Water pick up values for the uncured prepreg moulding material and tows of the invention may be in the range of from 1 to 90%, 5 to 85%, 10 to 80%, 15 to 75%, 15 to 70%, 15 to 60%, 15 to 50%, 15 to 40%, 15 to 35%, 15 to 30%, 20 to 30%, 25 to 30% and/or combinations of the aforesaid ranges.

In a preferred embodiment the interior of the fibrous material is at least partially resin free to provide an air venting path or structure, so that air that may be present in the tows from the outset or that may be introduced during impregnation with the liquid resin is not trapped within the structure by the resin and can escape during preparation and consolidation of the prepreg. The air is able to escape along the length of the tows and also from the second side of the fibrous layer if the impregnation by the resin is such that some or all of the surface of the second side of the fibrous layer is not carrying resin. Furthermore, the provision of the spaces between the filaments of the tows will allow air trapped between the prepregs during stack formation to escape particularly if, in addition, one side of the prepreg is not entirely coated with resin.

The interstitial resin ensures that the material has adequate structure at room temperature to allow handling of the material. This is achieved because at room temperature (23°C), the resin has a relatively high viscosity, typically in the range of from 1000 to 100,000 Pa.s, more typically in the range of from 5000 Pa.s to 500,000 Pa.s. Also, the resin may be tacky. Tack is a measure of the adhesion of a prepreg to a tool surface or to other prepreg plies in an assembly. Tack may be measured in relation to the resin itself or in relation to the prepreg in accordance with the method as disclosed in "Experimental analysis of prepreg tack", Dubois et al, (LaMI)UBP/IFMA, 5 March 2009. This publication discloses that tack can be measured objectively and repeatably by using the equipment as described therein and by measuring the maximum debonding force for a probe which is brought in contact with the resin or prepreg at an initial pressure of 30N at a constant temperature of 30°C and which is subsequently displaced at a rate of 5 mm/min. For these probe contact parameters, the tack F/Fref for the resin is in the range of from 0.1 to 0.6 where Fref = 28.19N and F is the maximum debonding force. For a prepreg, the tack F/Fref is in the range of from 0.1 to 0.45 for F/Fref where Fref = 28.19N and F is the maximum debonding force. However, a fibrous support web, grid or scrim may also be located on at least one exterior surface of the fibrous reinforcement to further enhance the integrity of the material or structure during handling, storage and processing.

The epoxy resin formulation of the invention which is used as the matrix resin material in the prepreg preferably has a storage modulus G' of from 3 x 10⁵ Pa to 1 x 10⁸ Pa and a loss modulus G" of from 2 x 10⁶ Pa to 1 x 10⁸ Pa at room temperature (20°C). Preferably, the resin material has a storage modulus G' of from 1 x 10⁶ Pa to 1 x 10⁷ Pa, more preferably from 2 x 10⁶ Pa to 4 x 10⁶ Pa at room temperature (20°C). Preferably, the resin material has a loss modulus G" of from 5 x 10⁶ Pa to 1 x 10⁷ Pa, more preferably from 7 x 10⁶ Pa to 9 x 10⁶ Pa at room temperature (20°C).
Preferably, the resin material has a complex viscosity of from 5 x 10⁵ Pa to 1 x 10⁷ Pa.s, more preferably from 7.5 x 10⁵ Pa to 5 x 10⁶ Pa.s at room temperature (20°C). Preferably, the resin material has a complex viscosity of from 1 x 10⁶ Pa to 2 x 10⁶ Pa.s. more preferably from 5 to 30 Pa.s at 80°C. Preferably, the resin material has a viscosity of from 10 to 25 Pa.s at 80°C. Preferably, the resin material is an epoxy resin.

We have discovered that the aforesaid storage modulus and loss modulus properties allow the air venting structure to remain in place during handling, storage and lay up of the prepreg moulding material or structure up to the start of processing when the laminate stack is heated up to temperatures over 40°C (such as 60°C) and a vacuum pressure is applied, even if multiple plies (stacks of 20, 30, 40, 60 or even more plies) are laid up.

Preferably, the prepreg moulding material is elongate in a longitudinal direction thereof and the fibrous reinforcement is unidirectional along the longitudinal direction of the prepreg.

The behaviour of thermosetting prepreg materials is highly viscoelastic at the typical lay-up temperatures used. The elastic solid portion stores deformation energy as recoverable elastic potential, whereas a viscous liquid flows irreversibly under the action of external forces.

This complex viscosity is obtained using a rheometer to apply an oscillation experiment. From this the complex modulus G* is derived as the complex oscillation which is applied to the material is known (Principles of Polymerization, John Wiley & Sons, New York, 1981).

In viscoelastic materials the stress and strain will be out of phase by an angle delta. The individual contributions making the complex viscosity are defined as G' (Storage Modulus) = G* x cos (delta); G" (Loss Modulus) = G* x sin(delta). This relationship is shown in Figure 8 of WO 2009/118536.

G* is the complex modulus. G' relates to how elastic the material is and defines its stiffness. G" relates to how viscous a material is and defines the damping, and liquid non recoverable flow response of the material.

For a purely elastic solid (glassy or rubbery), G" =0 and the phase angle delta is 0°, and for a purely viscous liquid, G'=0 and the phase angle delta is 90°.

The loss modulus G" indicates the irreversible flow behaviour and a material with a high loss modulus G" is also desirable to prevent the early creep-like flow and maintain an open air path for longer. Therefore the resin used in the prepregs of the present invention has a high storage modulus and a high loss modulus, and correspondingly a high complex modulus, at a temperature corresponding to a typical lay-up temperature, such as room temperature (21°C).

In this specification, the viscoelastic properties, i.e. the storage modulus, loss modulus and complex viscosity, of the resin used in the prepregs of the present invention were* measured at application temperature (i.e. a lay-up temperature of 20°C) by using a Bohlin VOR Oscillating Rheometer with disposable 25 mm diameter aluminium plates. The measurements were carried out with the following settings: an oscillation test at increasing temperature from 50°C to 150°C at 2°C/mm with a controlled frequency of 1.59 Hz and a gap of 500 micrometres.

Typically, the stiffness of the viscoelastic prepreg is characterised by the resin exhibiting a high elastic rheological response. The resin rheology is characterised by a storage modulus G' of the resin at room temperature, preferably between 3 x 10⁵ Pa and 1 x 10⁸ Pa at 20°C, more preferably from 1 x 10⁶ Pa to 1 x 10⁷ Pa, yet more preferably from 2 x 10⁶ Pa to 4 x 10⁶ Pa. The higher the storage modulus at room temperature (20°C), the greater the air transport properties of the prepreg stack. However, the upper limit of the storage modulus is limited because otherwise the prepreg would become too rigid and would develop a tendency to snap as the prepreg is being laminated even onto the gentle curvature typical in a wind turbine spar.

In the manufacture of a structural member using the prepreg moulding material or structure of the present invention, preferably the resin has a high loss modulus G" between 2 x 10⁶ Pa and 1 x 10⁸ Pa at 20°C, more preferably from 5 x 10⁶ Pa to 1 x 10⁷ Pa, yet more preferably from 7 x 10⁶ Pa to 9 x 10⁶ Pa.

The resin material preferably has a high complex viscosity at 20°C of from 5 x 10⁵ Pa to 1 x10⁷ Pa.s, more preferably from 7.5 x 10⁵ Pa to 5 x 10⁶ Pa.s, yet more preferably from 1 x 10⁶ Pa to 2 x 10⁶ Pa.s.

In order to produce final laminates with substantially uniform mechanical properties it is important that the structural fibres and the epoxy resin be mixed to provide a substantially homogenous prepreg. This requires uniform distribution of the structural fibres within the prepreg to provide a substantially continuous matrix of the resin surrounding the fibres. It is therefore important to minimise the encapsulation of air bubbles within the resin during application to the fibres. It is therefore preferred to use high viscosity resins. The prepregs should contain a low level of voids in order and it is therefore preferred that each prepreg and the prepreg stack has a water pick-up value of less than 9%, more preferably less than 6%, most preferably less than 3%. The water pick-up test determines the degree of waterproofing or impregnation of prepregs. For this purpose, a specimen of prepreg material is initially weighed and clamped between two plates in such a way that a strip of specimen 15 mm wide protrudes. This arrangement is suspended in the direction of the fibres in a water bath for 5 minutes. After removing the plates, the specimen is again weighed. The difference in weight is used as a measured value for the degree of impregnation. The smaller the amount of water picked up, the higher the degree of waterproofing or impregnation.

The prepregs of this invention are intended to be laid-up with other layers of materials which may be other composite materials (e.g. other prepregs according to the invention or other prepregs) to produce a prepreg stack which can be cured to produce a fibre reinforced laminate. In other embodiments the prepregs may be laid up with other layers such as metal foils such as steel and aluminium foil.

The prepreg is typically produced as a roll of prepreg and in view of the tacky nature of such materials, a backing sheet is generally provided to enable the roll to be unfurled at the point of use. Thus, preferably the prepreg according to the invention comprises a backing sheet on an external face.

The epoxy resin of functionality at least 2 used in this invention has a high reactivity. The epoxy equivalent weight (EEW) of the resin is in the range from 150 to 1500, preferably of from 200 to 500 and the resin composition comprises the epoxy resin in combination with an accelerator or curing agent. Suitable epoxy resins may comprise blends of two or more epoxy resins selected from monofunctional, difunctional, trifunctional and/or tetrafunctional epoxy resins.

Suitable difunctional epoxy resins, by way of example, include those based on: diglycidylether of bisphenol F, diglycidyl ether of bisphenol A (optionally brominated), phenol and cresol epoxy novolacs, glycidyl ethers of phenol-aldelyde adducts, glycidyl ethers of aliphatic diols, diglycidyl ether, diethylene glycol diglycidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, glycidyl esters or any combination thereof.

Difunctional epoxy resins may be selected from diglycidyl ether of bisphenol F, diglycidyl ether of bisphenol A, diglycidyl dihydroxy naphthalene, or any combination thereof.

Suitable trifunctional epoxy resins, by way of example, may include those based upon phenol and cresol epoxy novolacs, glycidyl ethers of phenol-aldehyde adducts, aromatic epoxy resins, aliphatic triglycidyl ethers, dialiphatic triglycidyl ethers, aliphatic polyglycidyl amines, heterocyclic glycidyl imidines and amides, glycidyl ethers, fluorinated epoxy resins, or any combination thereof. Suitable trifunctional epoxy resins are available from Huntsman Advanced Materials (Monthey, Switzerland) under the tradenames MY0500 and MY0510 (triglycidyl para-aminophenol) and MY0600 and MY0610 (triglycidyl meta-aminophenol). Triglycidyl meta-aminophenol is also available from Sumitomo Chemical Co. (Osaka, Japan) under the tradename ELM-120.

Suitable tetrafunctional epoxy resins include N,N, N',N'-tetraglycidyl-m-xylenediamine (available commercially from Mitsubishi Gas Chemical Company under the name Tetrad-X, and as Erisys GA-240 from CVC Chemicals), and N,N,N',N'-tetraglycidylmethylenedianiline (e.g. MY0720 and MY0721 from Huntsman Advanced Materials). Other suitable multifunctional epoxy resins include DEN438 (from Dow Chemicals, Midland, MI) DEN439 (from Dow Chemicals), Araldite ECN 1273 (from Huntsman Advanced Materials), and Araldite ECN 1299 (from Huntsman Advanced Materials).

The reinforcing fibres may be synthetic or natural fibres or any other form of material or combination of materials that, combined with the resin composition of the invention, forms a composite product. The reinforcement web can either be provided via spools of fibre that are unwound or from a roll of textile. Exemplary fibres include glass, carbon, graphite, boron, ceramic and aramid. Preferred fibres are carbon and glass fibres particularly carbon fibres.

Hybrid or mixed fibre systems may also be envisaged. The use of cracked (i.e. stretch-broken) or selectively discontinuous fibres may be advantageous to facilitate lay-up of the product according to the invention and improve its capability of being shaped. Although a unidirectional fibre alignment is preferable, other forms may also be used. Typical textile forms include simple textile fabrics, knit fabrics, twill fabrics and satin weaves. It is also possible to envisage using non-woven or non-crimped fibre layers. The surface mass of fibres within the fibrous reinforcement is generally 80-4000 g/m², preferably 100-2500 g/m², and especially preferably 150-2000 g/m². The number of carbon filaments per tow can vary from 3000 to 320,000, again preferably from 6,000 to 160,000 and most preferably from 12,000 to 48,000. For fibreglass reinforcements, fibres of 600-2400 tex are particularly adapted.

Exemplary layers of unidirectional fibrous tows are made from HexTow® carbon fibres, which are available from Hexcel Corporation. Suitable HexTow® carbon fibres for use in making unidirectional fibre tows include: IM7 carbon fibres, which are available as tows that contain 6,000 or 12,000 filaments and weight of 0.223 g/m and 0.446 g/m respectively; IM8-IM10 carbon fibres, which are available as tows that contain 12,000 filaments and weigh from 0.446 g/m to 0.324 g/m; and AS7 carbon fibres, which are available in tows that contain 12,000 filaments and weigh 0.800 g/m, tows containing up to 80,000 or 50,000 (50K) filaments may be used such as those containing about 25,000 filaments available from Toray and those containing about 50,000 filaments available from Zoltek. The tows typically have a width of from 3 to 7 mm and are fed for impregnation on equipment employing combs to hold the tows and keep them parallel and unidirectional.

Once prepared the prepreg may be rolled-up, so that it can be stored for a period of time. It can then be unrolled and cut as desired and optionally laid up with other prepregs to form a prepreg stack in a mould or in a vacuum bag which is subsequently placed in a mould and cured.

Epoxy resins can become brittle upon curing and toughening materials can be included with the resin to impart durability although they may result in an undesirable increase in the viscosity of the resin. Alternatively the toughening material may be supplied as a separate layer such as a veil.

Where the additional toughening material is a polymer it should be insoluble in the matrix epoxy resin at room temperature and at the elevated temperatures at which the resin is cured. The polymer may be a thermoplastic suitable thermoplastics may comprise polyamides (PAS), polyethersulfone (PES) and polyetherimide (PEI). Polyamides such as nylon 6 (PA6) and nylon 12 (PA12) and mixtures thereof are preferred. We prefer to use a phenoxy resin which as well as being thermoplastic can be cured at elevated temperatures. A preferred formulation of this invention contains from 2 to 10 wt % of a phenoxy resin. We have found that the preferred mould release agents, the blend of organic fatty acid or its derivatives with surface active agents are compatible with such toughening agents when they are used in the epoxy resin formulation of this invention.

The prepregs of this invention are produced by impregnating the fibrous material with the epoxy resin. In order to increase the rate of impregnation, the process is preferably carried out at an elevated temperature so that the viscosity of the resin in reduced. However it must not be so hot for a sufficient length of time that premature curing of the resin occurs. Thus, the impregnation process is preferably carried out at temperatures in the range of from 40°C to 80°C.

The resin composition can be spread onto the external surface of a roller and coated onto a paper or other backing material to produce a layer of curable resin. The resin composition can then be brought into contact with the fibrous layer for impregnation perhaps by the passage through rollers. The resin may be present on one or two sheets of backing material, which are brought into contact with the structural fibrous layer and by passing them through heated consolidation rollers to cause impregnation. Alternatively the resin can be maintained in liquid form in a resin bath either being a resin that is liquid at ambient temperature or being molten if it is a resin that is solid or semi-solid at ambient temperature. The liquid resin can then be applied to a backing employing a doctor blade to produce a resin film on a release layer such as paper or polyethylene film. The structural fibrous layer may then be placed into the resin and optionally a second resin layer may be provided on top of the fibrous layer.

A backing sheet can be applied either before or after impregnation of the resin. However, it is typically applied before or during impregnation as it can provide a non-stick surface upon which to apply the pressure required for causing the resin to impregnate the fibrous layer.

Once prepared the prepreg may be rolled-up, so that it can be stored for a period of time. It can then be unrolled and cut as desired and optionally laid up with other prepregs to form a prepreg stack in a mould or in a vacuum bag which is subsequently placed in a mould.

Once it is created in the mould the prepreg or prepreg stack may be cured by exposure to an externally applied elevated temperature in the range 70°C to 110°C, and optionally elevated pressure, to produce a cured laminate.

The exotherm due to the curing of the prepreg stack may take the temperatures within the stack to above 110°C, however we have found that if the externally applied temperature is within the range of 70°C to 110°C, curing of a prepreg or stack of prepregs based on an epoxy resin of EEW from 150 to 1500 particularly of EEW from 200 to 500 can be accomplished at a temperature of about 150°C in less than 150 seconds to provide a cured resin having a Tg of between 130 and 140°C and a Phase angle at 140°C of 20° or lower so that the cured article can be removed from the mould without undue delay.

Thus, in further aspect, the invention relates to a process of curing the epoxy resin within a prepreg or prepreg stack as described herein, the process involving exposing the prepreg or prepreg stack to an externally applied temperature in the range whereby the epoxy resin composition cures in less than 150 seconds. The process may be performed in a vacuum bag which may be placed in a mould or directly in a mould and is preferably carried out at a pressure of less than 3.0 bar absolute.

The curing process may be carried out at a pressure of less than 2.0 bar absolute. In a particularly preferred embodiment the pressure is less than atmospheric pressure. The curing process may be carried out employing one or more externally applied temperatures in the range of from 70°C to 110°C, for a time sufficient to cure the epoxy resin composition to the desired degree. In particular it is preferred that the curing cycle has a duration of less than three hours.

Curing at a pressure close to atmospheric pressure can be achieved by the so-called vacuum bag technique. This involves placing the prepreg or prepreg stack in an air-tight bag and creating a vacuum on the inside of the bag, the bag may be placed in a mould prior or after creating the vacuum and the resin then cured by externally applied heat to produce the moulded laminate. The use of the vacuum bag has the effect that the prepreg stack experiences a consolidation pressure of up to atmospheric pressure, depending on the degree of vacuum applied.

Upon curing, the prepreg or prepreg stack becomes a composite laminate, suitable for use in a structural application, such as for example an automotive, marine vehicle or an aerospace structure or a wind turbine structure such as a shell for a blade or a spar. Such composite laminates can comprise structural fibres at a level of from 80% to 15% by volume, preferably from 58% to 65% by volume.

We have found that the use of the epoxy resin formulations of this invention allows prepregs or stacks of prepregs to be cured and readily removed from a mould in no longer than 5 minutes and in some instances no more than two minutes. We have also found that upon removal the mould is ready for the next moulding cycle without the need for extensive cleaning and preparation of the mould.

### Examples

The present invention is illustrated by reference to the following Examples.

### Example 1

Samples of neat resin containing 0.5 %, 1% or 2% of release agent were mixed and cast into 200 gsm films. The films were pressed into 150 by 150 mm squares of G803 fabric (Hexcel Reinforcements, Les Avenieres, France) to form a prepreg. A fast cure resin system sold by Hexcel Corporation under the tradename of M77 was used as the neat resin. Four plies of prepreg were laid up onto a plate of degreased aluminium. Samples were hot loaded into a press and press cured at 150 °C for 6 minutes at 7.2 bar. Once cooled, the cured laminate and the aluminium to which it was adhered were removed from the press and cut into a smaller 50 mm by 50 mm square. In the centre of each of these squares a 10 mm radius bore cutting drill bit was used to cut through the laminate into the aluminium below. A dolly was attached to the circles of prepreg using Redux 810 adhesive. The dolly was then connected to an Instron materials testing rig, the force required to remove the prepreg circle from the aluminium sheet was measured using the Instron. The pull off force was compared as a percentage of the pull off force for an identical prepreg free from any release agent.

The results were as follows.

**Table 1**

| Release agent | Weight percent | Percent reduction of pull off force |
|---|---|---|
| Stearate | 1% | 65% |

A resin formulation according the invention was produced comprising the following:
0.5% by weight of Release Agent Axel INT-1324
95% by weight of M77 Hexcel Corporation

Moulding compound was produced from a prepreg comprising the resin formulation. the prepreg comprised 150 gsm of unidirectional carbon fibre and 38% by weight of the resin formulation. The prepreg was cut into 0.85 by 5 cm chips and pressed into a sheet to form the moulding compound.

Samples of moulding compound measuring 100 mm by 100 mm squares were cut and press cured between two steel plates at 150°C for 2 minutes under 75 bar of applied pressure. Both mould surfaces were initially treated with externally applied Airtech Cirex 043 release agent before the first sample of moulding compound was applied.

Eighty eight samples were cured in this manner, all of which were easily removed from the mould. The first 20 required very easily removed from the mould, but as the number of cures rose this increased slightly. After the first 20 samples the force to remove did not increase, suggesting the initial application of external release agent has been disrupted beyond that point. Because the remaining samples were successfully demoulded further samples would continue to be demoulded without an additional externally applied release agent.

### Example 2

A second resin formulation was made as above only the weight % of release agent was doubled to 1%. Samples were cured in the mould as described above. Forty two samples were successfully demoulded without reapplication of an external mould release.

### Example 3

Neat resin samples were prepared from M77 resin as supplied by Hexcel Corporation in which the resin samples contained commercially available release agents as follows:

**Table 2**

| Sample | **Release agent** | **Weight% based on total weight of resin** |
|---|---|---|
| A | INT 1324LE (Axel) | 0.5% |
| B | INT 1888LE (Axel) | 2% |
| C | INT 1888LE (Axel) | 1% |
| D | Byk 9912 (Altana) | 2% |

Films were cold pressed in the form of discs, 50 mm in diameter to a thickness of 1 mm. The films were loaded into an Instron 5969 Dual Column Tabletop Testing System (compression/ tensile tester) on corresponding circular disc shaped test surfaces of 50 mm in diameter.

The disc shaped test surfaces were prepared to have varying surface roughness as set out in the below Table 3. The surface roughness was measured using a Mitotoyo Surftest 301.

**Table 3**

| **Roughness (µm)** | **Sample A Pull force (MPa)** | **Sample B Pull force (MPa)** | **Sample C Pull force (MPa)** | **Sample D Pull force (MPa)** |
|---|---|---|---|---|
| 2.5 | 5.0 | 2.6 | 4.0 | 2.3 |
| 1 | 4.8 | 3.2 | - | 1.8 |
| 0.4 | 3.7 | 2.2 | 4.2 | 1.7 |

The samples were cured at an isothermal temperature of 150°C for 2 minutes. Directly following cure, the disc shaped surfaces were moved apart and the force was measured to separate the cured neat resin disc from a disc surface as the pull force in MPa (Pull force = separation force, F/ surface area of the disc, A). The results are presented in Table 3.

## Claims

1. An epoxy resin formulation containing a urea based curing agent that can be cured at 150°C to 95% cure, as measured by Digital scanning Calorimetry, in no more than 150 seconds, and can be cured at 120°C to 95% cure in no more than 4 minutes to provide a cured resin having a glass transition temperature (Tg) as determined in accordance with ASTM D7028 of no greater than 140°C, wherein the formulation further contains a mould release agent and further wherein the release agent comprises unsaturated fatty acids and/or saturated fatty acids; or wherein the release agent comprises components selected from triglycerides; or wherein the release agent comprises polyunsaturated fatty acids and/or mono unsaturated fatty acids and/or saturated fatty acids; or wherein the release agent comprises one or more components selected from alpha linoleic acid, linoleic acid, oleic acid, stearic acid, and palmitic acid.

2. An epoxy resin formulation according to Claim 1 in which the cured epoxy resin formulation has a Phase angle below 20° at a temperature below 140°C, preferably below 15°, more preferably below 10°; and/or in which the phase angle is above 10° or 20° or 30° or 40° at a temperature below 140°C.

3. A prepreg containing an epoxy resin formulation according to any of the preceding claims.

4. An epoxy or a prepreg according to any of the preceding claims containing from 0.25 to 5 wt % preferably 0.4 to 3 wt % of the mould release agent.

5. An epoxy resin formulation or a prepreg according to any of the preceding claims in which the mould release agent is a blend of organic fatty acid derivatives with surface active agents.

6. An epoxy resin formulation or a prepreg according to any of the preceding claims in which the epoxy resin contains from 4 to 10 wt % based on the weight of the epoxy resin of the curing agent.

7. An epoxy resin formulation or a prepreg according to any of the preceding claims in which the epoxy resin has a functionality of at least 2.

8. An epoxy formulation or a prepreg according to any of the preceding claims, wherein the formulation or prepreg has a Tg as measured in accordance with ASTM D7028 in a range of from T_{cure}-20°C < T_{g} < T_{cure}, preferably from T_{cure}-15°C < T_{g} < T_{cure}, more preferably from T_{cure}-10°C < T_{g} < T_{cure} when cured at a cure temperature T_{cure1} for no more than 10 to 140 seconds, 30s to 180s, preferably from 40s to 120s, more preferably from 35s to 100s and/or combinations of the aforesaid ranges, and cured at a cure temperature of T_{cure2} for no more than 30s to 220s, preferably from 80s to 200s, more preferably from 130s to 190s and/or combinations thereof with T_{cure 1} selected from 180°C, 160°C or 150°C and T_{cure2} selected from 140°C, 130°C or 120°C

9. The use of a prepreg according to any of Claims 3 to 7 for the high volume sequential manufacture of articles, optionally in which the manufacture comprises forming the prepreg and curing by heating, preferably in which the forming and curing of the prepreg takes place in a mould, more preferably in which the prepreg is introduced into the mould, formed and cured in the mould and removed from the mould in less than 5 minutes, most preferably in which the time is no more than 2 minutes.

10. A method of demoulding a moulding comprising an epoxy resin formulation as defined in claim 1 or claim 2, wherein the moulding has a Tg within 20%, preferably within 10% of the temperature of the moulding.

## Patentansprüche

1. Epoxidharzformulierung, die ein Härtungsmittel auf Harnstoffbasis enthält, das bei 150 °C innerhalb von nicht mehr als 150 Sekunden bis auf eine gemäß dynamischer Differentialkalorimetrie gemessene Härtung von 95 % gehärtet werden kann und bei 120 °C innerhalb von nicht mehr als 4 Minuten bis auf eine Härtung von 95 % gehärtet werden kann, zur Bereitstellung eines gehärteten Harzes mit einer entsprechend der ASTM D7028 bestimmten Glasübergangstemperatur (Tg) von nicht mehr als 140 °C, wobei die Formulierung ferner ein Formtrennmittel enthält und ferner wobei das Trennmittel ungesättigte Fettsäuren und/oder gesättigte Fettsäuren umfasst oder wobei das Trennmittel aus Triglyceriden ausgewählte Komponenten umfasst oder wobei das Trennmittel mehrfach ungesättigte Fettsäuren und/oder einfach ungesättigte Fettsäuren und/oder gesättigte Fettsäuren umfasst oder wobei das Trennmittel eine oder mehrere aus alpha-Linolsäure, Linolsäure, Ölsäure, Stearinsäure und Palmitinsäure ausgewählte Komponenten umfasst.

2. Epoxidharzformulierung nach Anspruch 1, wobei die gehärtete Epoxidharzformulierung bei einer Temperatur unter 140 °C einen Phasenwinkel von weniger als 20°, vorzugsweise weniger als 15°, weiter bevorzugt weniger als 10° aufweist und/oder wobei der Phasenwinkel bei einer Temperatur unter 140 °C über 10° oder 20° oder 30° oder 40° liegt.

3. Prepreg, enthaltend eine Epoxidharzformulierung nach einem der vorhergehenden Ansprüche.

4. Epoxid oder Prepreg nach einem der vorhergehenden Ansprüche, enthaltend 0,25 bis 5 Gew.-%., vorzugsweise 0,4 bis 3 Gew.-% des Formtrennmittels.

5. Epoxidharzformulierung oder Prepreg nach einem der vorhergehenden Ansprüche, wobei es sich bei dem Formtrennmittel um eine Mischung von Derivaten organischer Fettsäuren mit oberflächenaktiven Mitteln handelt.

6. Epoxidharzformulierung oder Prepreg nach einem der vorhergehenden Ansprüche, wobei das Epoxidharz 4 bis 10 Gew.-%, bezogen auf das Gewicht des Epoxidharzes, des Härtungsmittels enthält.

7. Epoxidharzformulierung oder Prepreg nach einem der vorhergehenden Ansprüche, wobei das Epoxidharz eine Funktionalität von mindestens 2 aufweist.

8. Epoxidformulierung oder Prepreg nach einem der vorhergehenden Ansprüche, wobei die Formulierung oder das Prepreg eine entsprechend der ASTM D7028 gemessene Tg in einem Bereich von T_{cure}-20°C < T_{g} < T_{cure}, vorzugsweise T_{cure}-15°C < T_{g} < T_{cure}, weiter bevorzugt T_{cure}-10°C < T_{g} < T_{cure}, aufweist, wenn sie bei einer Härtungstemperatur T_{cure1} für nicht mehr als 10 bis 140 Sekunden, 30 s bis 180 s, vorzugsweise 40 s bis 120 s, weiter bevorzugt 35 s bis 100 s und/oder Kombinationen der vorgenannten Bereiche und bei einer Härtungstemperatur T_{cure2} für nicht mehr als 30 s bis 220 s, vorzugsweise 80 s bis 200 s, weiter bevorzugt 130 s bis 190 s und/oder Kombinationen davon gehärtet wird, wobei T_{cure1} aus 180 °C, 160 °C oder 150 °C ausgewählt ist und T_{cure2} aus 140 °C, 130 °C oder 120 °C ausgewählt ist.

9. Verwendung eines Prepregs nach einem der Ansprüche 3 bis 7 bei der Großserienfertigung von Gegenständen, wobei die Fertigung gegebenenfalls die Bildung des Prepregs und das Härten durch Erhitzen umfasst, wobei vorzugsweise die Bildung und das Härten des Prepregs in einem Formwerkzeug erfolgt, wobei das Prepreg weiter bevorzugt in weniger als 5 Minuten in das Formwerkzeug eingebracht wird, in dem Formwerkzeug geformt und gehärtet wird und aus dem Formwerkzeug entnommen wird, wobei die Zeit am stärksten bevorzugt nicht mehr als 2 Minuten beträgt.

10. Verfahren zum Entformen eines Formteils, umfassend eine gemäß Anspruch 1 oder Anspruch 2 definierte Epoxidharzformulierung, wobei der Formkörper eine Tg aufweist, die innerhalb von 20 %, vorzugsweise innerhalb von 10 % der Temperatur des Formteils liegt.

## Revendications

1. Formulation de résine époxy contenant un agent de durcissement à base d'urée qui peut être durcie à 50 °C jusqu'à 95 % de durcissement, tel que mesuré par calorimétrie à balayage numérique, en pas plus de 150 secondes, et qui peut être durcie à 120 °C jusqu'à 95 % de durcissement en pas plus de 4 minutes pour fournir une résine durcie possédant une température de transition vitreuse (Tv) telle que déterminée conformément à la norme ASTM D7028 non supérieure à 140 °C, la formulation contenant en outre un agent de libération de moule et en outre l'agent de libération comprenant des acides gras insaturés et/ou des acides gras saturés ; ou l'agent de libération comprenant des composants choisis parmi des triglycérides ; ou l'agent de libération comprenant des acides gras polyinsaturés et/ou des acides gras monoinsaturés et/ou des acides gras saturés ; ou l'agent de libération comprenant un ou plusieurs composants choisis parmi l'acide alpha-linoléique, l'acide linoléique, l'acide oléique, l'acide stéarique, et l'acide palmitique.

2. Formulation de résine époxy selon la revendication 1 dans laquelle la formulation de résine époxy durcie possède un angle de phase inférieur à 20° à une température inférieure à 140 °C, préférablement inférieur à 15°, plus préférablement inférieur à 10° ; et/ou dans laquelle l'angle de phase est supérieur à 10° ou 20° ou 30° ou 40° à une température inférieure à 140 °C.

3. Préimprégné contenant une formulation de résine époxy selon l'une quelconque des revendications précédentes.

4. Époxy ou préimprégné selon l'une quelconque des revendications précédentes contenant de 0,25 à 5 % en poids, préférablement 0,4 à 3 % en poids de l'agent de libération de moule.

5. Formulation de résine époxy ou préimprégné selon l'une quelconque des revendications précédentes dans laquelle/lequel l'agent de libération de moule est un mélange de dérivés d'acide gras organique avec des agents tensioactifs.

6. Formulation de résine époxy ou préimprégné selon l'une quelconque des revendications précédentes dans laquelle/lequel la résine époxy contient de 4 à 10 % en poids, sur la base du poids de la résine époxy, de l'agent de durcissement.

7. Formulation de résine époxy ou préimprégné selon l'une quelconque des revendications précédentes dans laquelle/lequel la résine époxy possède une fonctionnalité d'au moins 2.

8. Formulation d'époxy ou préimprégné selon l'une quelconque des revendications précédentes dans laquelle/lequel la formulation ou le préimprégné possède une Tv telle que mesurée conformément à la norme ASTM D7028 dans une plage allant de T_{durcissement} - 20 °C < Tᵥ < T_{durcissement}, préférablement de T_{durcissement} - 15 °C < Tᵥ < T_{durcissement}, plus préférablement de T_{durcissement} - 10 °C < Tᵥ < T_{durcissement} lorsque durci (e) à une température de durcissement T_{durcissement1} pendant pas plus de 10 à 140 secondes, 30 s à 180 s, préférablement de 40 s à 120 s, plus préférablement de 35 s à 100 s et/ou des combinaisons des plages mentionnées précédemment, et durci(e) à une température de durcissement T_{durcissement2} pendant pas plus de 30 s à 220 s, préférablement de 80 s à 200 s, plus préférablement de 130 s à 190 s et/ou des combinaisons correspondantes, avec T_{durcissement1} choisie parmi 180 °C, 160 °C et 150 °C et T_{durcissement2} choisie parmi 140 °C, 130 °C et 120 °C.

9. Utilisation d'un préimprégné selon l'une quelconque des revendications 3 à 7 pour la fabrication séquentielle en gros volume d'articles, éventuellement dans laquelle la fabrication comprend la formation du préimprégné et le durcissement par chauffage, préférablement dans laquelle la formation et le durcissement du préimprégné ont lieu dans un moule, plus préférablement dans laquelle le préimprégné est introduit dans le moule, formé et durci dans le moule et retiré du moule en moins de 5 minutes, le plus préférablement dans laquelle le temps n'est pas supérieur à 2 minutes.

10. Procédé de démoulage d'un moulage comprenant une formulation de résine époxy telle que définie dans la revendication 1 ou la revendication 2, le moulage possédant une Tv dans les 20 %, préférablement dans les 10 % de la température du moulage.
